# EUROPÄISCHE PATENTSCHRIFT

(11) **EP 1 142 082 B1**
(45) Veröffentlichungstag und Bekanntmachung des Hinweises auf die Patenterteilung: **23.02.2005**
(21) Anmeldenummer: 99966962.5
(22) Anmeldetag: 14.12.1999
(51) Int. Cl.: H02K 5/22, H05K 3/32

(54) **ZUR BEFESTIGUNG AUF EINER LEITERPLATTE BESTIMMTER ELEKTROMOTOR**
ELECTRIC MOTOR TO BE ATTACHED TO A PRINTED BOARD
MOTEUR ELECTRIQUE DESTINE A ETRE MONTE SUR CIRCUIT IMPRIME

(30) Priorität: 23.12.1998 DE 19860111; 19.03.1999 DE 19912533
(43) Veröffentlichungstag der Anmeldung: 10.10.2001
(73) Patentinhaber: Siemens Aktiengesellschaft, 80333 München (DE)
(72) Erfinder: BLUME, Heinrich-Jochen, D-64291 Darmstadt (DE); VORBERG, Thomas, D-63743 Aschaffenburg (DE); KEUTZ, Markus, D-64380 Rossdorf (DE); SCHMIDT, Peter, D-60528 Frankfurt (DE); KRONENBERG, Klaus, D-65843 Sulzbach (DE); VORBERG, Sabine, D-63743 Aschaffenburg (DE); WEIAND, Frank, D-63739 Aschaffenburg (DE)
(86) Internationale Anmeldenummer: PCT/EP1999/009884
(87) Internationale Veröffentlichungsnummer: WO 2000/039910

(56) Entgegenhaltungen:
- EP-A- 0 666 424
- DE-A- 4 133 260
- DE-B- 2 757 305
- US-A- 4 931 679
- US-A- 5 825 115
- PATENT ABSTRACTS OF JAPAN vol. 1996, no. 01, 31. Januar 1996 (1996-01-31) & JP 07 244075 A (YAZAKI CORP), 19. September 1995 (1995-09-19)

## Beschreibung

Die Erfindung betrifft einen zur Befestigung auf einer Leiterplatte bestimmten Elektromotor mit einem Rotor und einem Stator, der mehrere Spulen und Statorbleche aufweist, wobei sich die Statorbleche von den Spulen zu dem Rotor erstrecken.

Aus dem Stand der Technik sind Elektromotoren, insbesondere als Meßwerke in Kraftfahrzeug-Anzeigeinstrumenten bekannt, bei denen die Spulenenden der Elektromotoren mit Stiften elektrisch leitend verbunden sind, die in Durchsteckmontage beispielsweise durch Wellenlöten mit einer Leiterplatte elektrisch leitend verbunden werden. Weiterhin ist aus dem Stand der Technik ein Elektromotor bekannt, bei dem die Spulen mit den Enden ihrer Wicklungen mit elektrischen Leitern einer Leiterplatte durch Löten in Oberflächenmontagetechnik verbindbar sind, wobei die Wicklungsenden um elektrisch nicht leitende gabelförmige Ausformungen des Spulenkörpers der jeweiligen Spule geschlungen sind. Nachteilig hierbei ist die aufwendige Herstellung der elektrischen Verbindung zwischen der Spule und der Leiterplatte. Ein solcher Motor is aus US 5825115 bekannt

JP 07244075 zeigt ein Anzeigeinstrument, das Kontaktfedern aufweist, die mit jeweils einem Ende der Spulen elektrisch leitend verbunden sind und die Kontaktfedern derart ausgestaltet sind, daß sie nach der Befestigung des Instruments auf der Leiterplatte unter Vorspannung in Anlage an elektrischen Leitern der Leiterplatte sind.

Aufgabe der Erfindung ist es daher, einen Elektromotor anzugeben, der einfach mit einer Leiterplatte ohne Durchsteckmontage elektrisch leitend verbunden werden kann.

Diese Aufgabe wird durch einen Motor gemäß Anspruch 1 gelöst

Eine einfache Montage für die Kontaktfedern ergibt sich, da die Spulen jeweils einen Spulenkörper aufweisen und die Kontaktfedern am oder in dem Spulenkörper befestigt sind. Die Montage läßt sich besonders einfach ausführen, da der Spulenkörper als Spritzgußteil ausgestaltet ist und die Kontaktfedern mit Teilen des Spulenkörpers umspritzt sind.

Eine dauerhafte elektrische Verbindung zwischen den Spulenwicklungen und den Kontaktfedern ist dadurch herstellt, in dem die Enden der Spulenwicklungen an die Kontaktfedern elektrisch leitend, beispielsweise durch Löten oder Schweißen, befestigt werden und dann die Kontaktfedern an diesen Enden derart gekröpft werden, daß die Spulenenden entlastet werden.

Ein Gehäuse, das Öffnungen für die Kontaktfedern aufweist, durch das die Kontaktfedern aus dem Gehäuse herausragen, schützt zum einen den Motor vor äußeren Einflüssen, vereinfacht weiterhin die Montage und läßt die direkte Montage der Kontaktfedern an den Spulen zu.

Wenn die Kontaktfedern derart ausgestaltet sind, daß sie nach der Montage des Motors auf der Leiterplatte unterhalb des Gehäuses in Auflage sind, wird weiterhin Platz auf der Leiterplatte eingespart. Außerdem kann das Gehäuse dann so gestaltet sein, daß die Leiterplatte nach Montage des Motors auf der Leiterplatte die Öffnungen vollständig bedeckt und so das Gehäuse geschlossen ist. So werden die mechanischen und elektrischen Bauteile des Motors beispielsweise bei einer nach der Montage erforderlichen Oberflächenmontage sonstiger Bauteile auf der Leiterplatte insbesondere gegen die Wärmeeinwirkung besser geschützt.

Durch eine Ausgestaltung der Kontaktfedern derart, daß sie nach der Montage des Motors auf der Leiterplatte seitlich des Gehäuses in Auflage sind, lassen sich die Kontaktfedern zusätzlich in Oberflächenmontage mit Leitern der Leiterplatte verlöten, wenn besondere Anforderungen an die Dauerhaftigkeit der elektrischen Verbindung gestellt werden. Hierbei läßt sich die Öffnung in dem Gehäuse so gestalten, daß das Gehäuse den Motor weitgehend schützt, so daß die Wärmeeinwirkung durch beispielsweise einen Reflow-Lötvorgang den Motor nicht beschädigt.

Der Motor läßt sich mit einem oder mehreren Rastzapfen besonders einfach und schnell auf der Leiterplatte befestigen. Diese Befestigung wird noch stabiler, wenn einer oder mehrere der Rastzapfen jeweils durch einen Spreizkörper spreizbar ist, der in das Innere des jeweiligen Rastzapfens einführbar ist.

Die Dauerhaftigkeit der vorbeschriebenen Verbindung kann noch erhöht werden, wenn der Spreizkörper in dem Rastkörper einrastbar ist und so auch bei allen denkbaren Erschütterungen oder Vibrationen seine Position nicht verlassen kann.

Eine kompakte Bauform des Elektromotors läßt sich dadurch erreichen, daß die Statorbleche einen Stator bilden, der zentrisch eine Öffnung zur Aufnahme des Rotors aufweist, wobei die einzelnen Statorbleche um die Öffnung herum angeordnet sind. Besonders kompakt wird der Motor, wenn er vier Statorbleche und zwei Spulen aufweist.

Dadurch, daß zwei einander gegenüberliegende Statorbleche einfach zueinander derart gekröpft sind, daß Teile der Statorbleche parallel zueinander ausgerichtet sind, zwischen denen die erste Spule magnetisch gekoppelt angeordnet ist und die zwei anderen Statorbleche in der Nähe der Öffnung eine erste Kröpfung und in der Nähe der freien Enden eine zweite Kröpfung aufweisen und zwischen den freien Enden die zweite Spule magnetisch gekoppelt ist, läßt sich erreichen, daß die Spulen parallel auf gleicher Höhe angeordnet werden können und so identisch ausgestaltet sein können.

Wenn die Statorbleche an den Öffnungen magnetisch gekoppelt sind, lassen sie sich zusammen einstückig aus einem Blech herstellen.

Wenn die Statorbleche an der Öffnung über ein nicht-magnetisches Metall miteinander verbunden sind, ist der Motor besonders leicht ansteuerbar.

Durch ein Verschweißen von Spulenkernen der Spulen mit den Statorblechen lassen sich die Spulen schnell, dauerhaft und effektiv mit den Statorblechen magnetisch koppeln.

Die Erfindung wird nachfolgend anhand der Figuren für besonders bevorzugte Ausführungsbeispiele näher erläutert. Es zeigen:
- Figur 1:: die Ansicht einer besonders bevorzugten Ausführungsform einer Spule des erfindungsgemäßen Elektromotors,
- Figur 2:: die Ansicht einer zweiten besonders bevorzugten Ausführungsform einer Spule des erfindungsgemäßen Elektromotors,
- Figur 3:: die perspektivische Ansicht eines besonders bevorzugten Ausführungsbeispiels der Statorbleche des erfindungsgemäßen Elektromotors,
- Figur 4:: die perspektivische Ansicht und den Teilschnitt eines Stators, bestehend aus Spulen aus Figur 1 die in Statorbleche aus Figur 3 eingesetzt sind im Zusammenwirken mit einem besonders bevorzugten Rotor,
- Figur 5:: eine Aufsicht auf ein besonders bevorzugtes Gehäuseunterteil eines erfindungsgemäßen Elektromotors zur Aufnahme des Stators und Rotors beispielsweise aus Figur 4,
- Figur 6:: die Ansicht und den Teilschnitt eines besonders bevorzugten Motors auf der Teilansicht einer Leiterplatte.

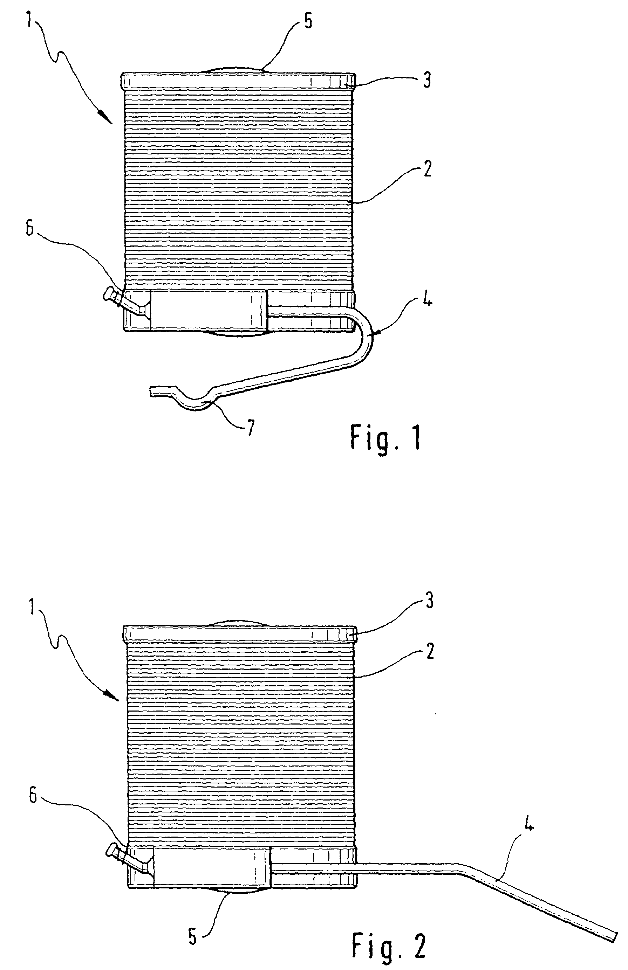

Das Ausführungsbeispiel in Figur 1 einer besonders bevorzugten Spule 1 weist eine Spulenwicklung 2, einen Spulenkörper 3, zwei Kontaktfedern 4 und einen Spulenkern 5 auf. Die Spulenwicklung 2 ist auf den spritzgegossenen Spulenkörper 3 gewickelt, in dem Teile der Kontaktfedern 4 mit dem Material des Spulenkörpers 3 umspritzt und so befestigt sind. Wicklungsenden 6 der Spulenwicklung 2 sind jeweils mit einem Ende einer Kontaktfeder 4 elektrisch leitend verbunden, beispielsweise durch Löten oder Verschweißen. Nach der Verbindung wird das entsprechende Ende der Kontaktfeder 4 wie dargestellt nach oben gekröpft bzw. gebogen, um das Ende der Spulenwicklung 2 zu entlasten. Die Kontaktfedern 4 sind aus einem Bandfedermaterial hergestellt und in etwa der Mitte um etwa 165° gebogen, wie aus Figur 1 ersichtlich. An ihrem anderen Ende weist die Kontaktfeder 4 einen Kontakthöcker 7 auf, mit dem ein elektrischer Leiter auf einer Leiterplatte kontaktiert werden soll. Die vorbeschriebene Ausführungsform ist bei einer Verwendung bei einem Elektromotor mit Gehäuse für eine Kontaktierung unterhalb des Gehäuses vorgesehen.

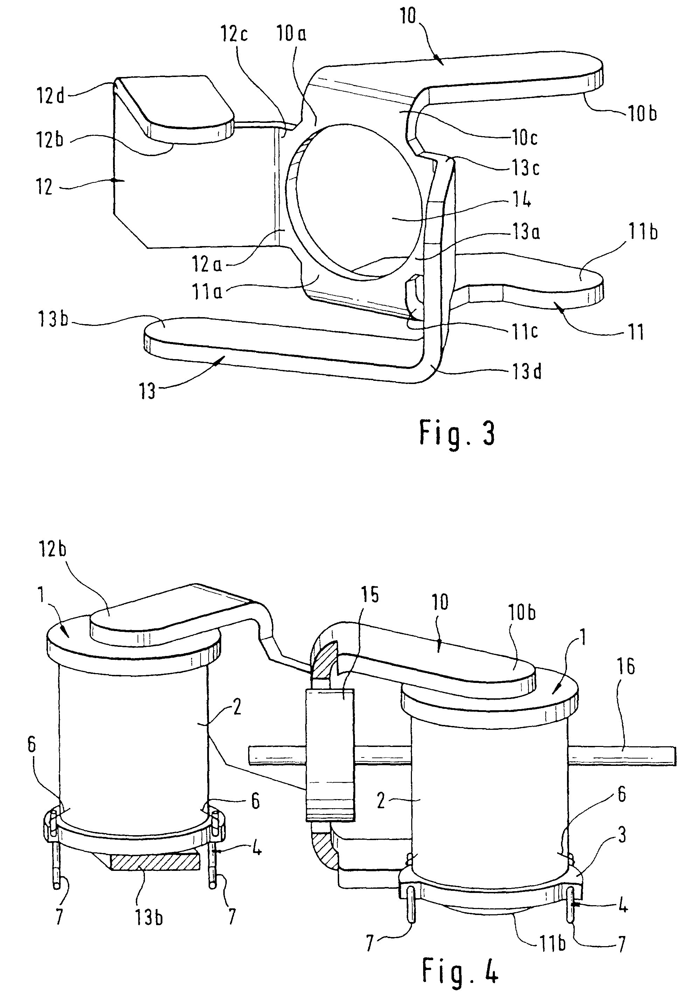

Die in Figur 2 dargestellte Spule 8 unterscheidet sich von der in Figur 1 dargestellten Spule 1 dadurch, daß ihre Kontaktfeder 9 in etwa ihrer Mitte nur um etwa 45° gebogen ist. Ansonsten stimmen ihre sonstigen Bauteile Spulenwicklung 2, Spulenkörper 3, Spulenkern 5 und Wicklungsende 6 mit der Spule 1 in Figur 1 überein. Die Spule 8 ist bei einer Verwendung bei einem Elektromotor mit Gehäuse für eine Kontaktierung seitlich des Gehäuses vorgesehen.

Die Verwendung der beiden vorbeschriebenen Spulen 1, 8 ist auch bei einem Motor ohne Gehäuse möglich.

In Figur 3 erkennt man vier Statorbleche 10, 11, 12, 13, die mit ihrem einen Ende 10a, 11a, 12a, 13a eine Öffnung 14 zur Aufnahme eines Rotors bilden und an der Öffnung 14 magnetisch gekoppelt sind. Die Statorbleche 10, 11, 12, 13 sind derart gebogen, daß sich jeweils zwei Statorbleche 10, 11 und 12, 13 mit jeweils einem Ende 10b, 11 b und 12b, 13b parallel zueinander befinden zur Aufnahme der in Figur 1 bzw. Figur 2 dargestellten Spulen 1 bzw. 8. Um diese Form zu erhalten, weisen die Statorbleche 10, 11 jeweils eine Kröpfung 10c, 11 c und die Statorbleche 12, 13 jeweils zwei Kröpfungen 12c, 12d, 13c, 13d auf.

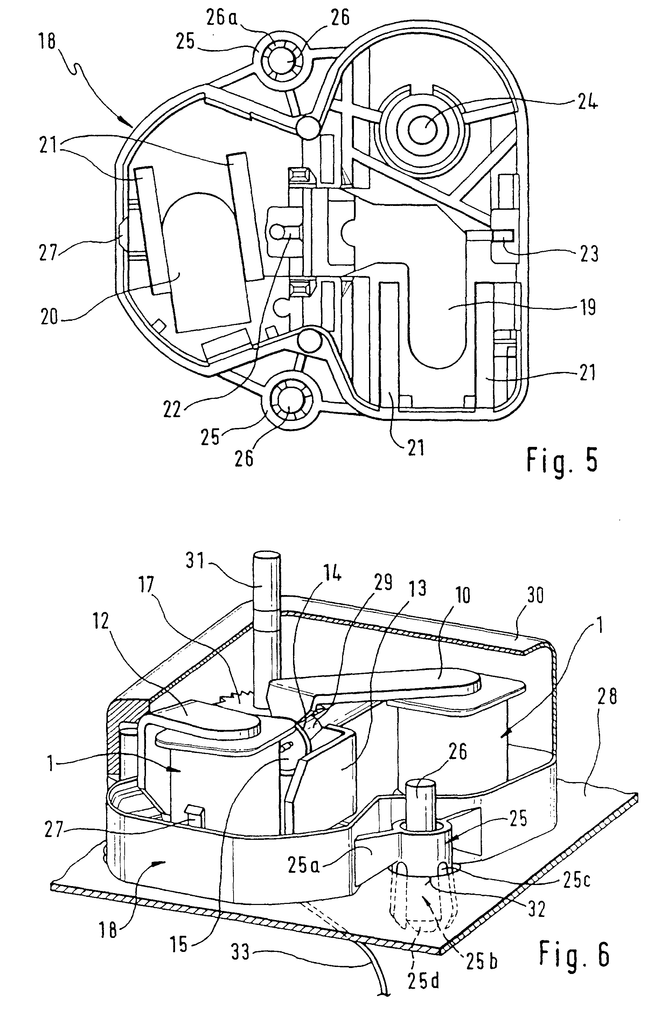

In Figur 4 ist je eine Spule 1 jeweils zwischen zwei Enden 10b, 11b und 12b, 13b der Statorbleche 10, 11, 12, 13 angeordnet. Vorzugsweise sind die in Figur 4 nicht sichtbaren Spulenkerne 5 im Bereich der Enden 10b, 11 b, 12b, 13b mit den Statorblechen 10, 11, 12, 13 verschweißt. Dies bewirkt eine stabile, schnelle Verbindung bei gleichzeitiger guter Weiterleitung des magnetischen Flusses. Die Verbindung zwischen den Statorblechen 10, 11, 12, 13 und den Spulen 1 kann aber auch durch andere Verbindungstechniken, wie beispielsweise Verschrauben oder Nieten, erfolgen.

Man erkennt in Figur 4 weiterhin einen Rotor, bestehend aus einer diametral magnetisierten Scheibe 15, die weitgehend in der Öffnung 14 angeordnet ist und mit einer Welle 16 drehfest verbunden ist. Auf der Welle 16 ist vorzugsweise eine nicht dargestellte Schnecke angeordnet, die mit einem in Figur 6 dargestellten Schneckenrad 17 zusammenwirkt. Die Lagerung der Welle 16 ist in Figur 4 ebenfalls nicht dargestellt. Wenn die beiden Spulen 1 bestromt werden, erzeugen sie einen magnetischen Fluß, der über die Statorbleche 10, 11, 12, 13 geleitet wird und eine Kraft auf die diametral magnetisierte Scheibe 15 ausübt. So kann der Elektromotor beispielsweise als Schrittmotor betrieben werden, wenn die Spulen nacheinander oder auch gleichzeitig mit Gleichstrom beaufschlagt werden. Auch ist es möglich, durch Ansteuern der beiden Spulen 1 mit um 90° versetzten sinusförmigen Strömen den Motor als Synchronmotor zu betreiben, bei dem die Drehzahl der Welle 16 der Frequenz der Sinusströme entspricht.

In Figur 5 weist ein Gehäuseunterteil 18 zwei flache Mulden 19, 20, vier Öffnungen in Form von Längsschlitzen 21, Wellenlager 22, 23, ein Schneckenwellenradlager 24, Rastzapfen 25 mit Spreizkörpern 26 und einen Rastclip 27 auf. Die flachen Mulden 19, 20 sind derart ausgestaltet, daß in der Mulde 19 das Statorblech 11 und in der Mulde 20 das Statorblech 13 aufliegen kann und so der Stator, bestehend aus Statorblechen 10, 11, 12, 13 und Spulen 1, in dem Gehäuseunterteil 18 eine vorbestimmte Position einnehmen kann. Dabei ragen dann die Kontaktfedern 4 durch die Längsschlitze 21 aus dem Gehäuseunterteil heraus. In den Wellenlagern 22, 23 ist die Welle 16 aus Figur 4 lagerbar und nimmt dann die richtige Lage in dem in den Figuren 3 und 4 beschriebenen Stator ein. Die Spreizkörper 26 sind über Stege 26a mit dem Rastzapfen 25 verbunden.

In Figur 6 ist ein Stator in ein Gehäuse, bestehend aus Gehäuseunterteil 18 und Gehäuseoberteil 30, eingesetzt. Der Stator unterscheidet sich von dem in den Figuren 3 und 4 beschriebenen Stator nur dadurch, daß die Statorbleche 10, 11, 12, 13 im Bereich der Öffnung 14 nicht magnetisch gekoppelt sind, sondern über einen Ring 29 aus nicht-magnetischem Metall, beispielsweise Messing, miteinander verbunden sind. Diese Verbindung kann beispielsweise durch eine Buckelverschweißung der Statorbleche 10, 11, 12, 13 mit dem Ring 29 bestehen. Die diametral magnetisierte Scheibe 15 ist über die in Figur 6 nicht dargestellte Welle 16 und der auf der Welle 16 angeordneten in Figur 6 ebenfalls nicht dargestellten Schnecke mit dem Schneckenrad 17 verbunden, das in axialer Richtung beidseitig mit einer Schneckenradwelle 31 verbunden ist. Die Schneckenradwelle 31 ist in der Gehäuseunterseite 18 im Schneckenradwellenlager 24 (siehe Figur 5) und im Gehäuseoberteil 30 in einem nicht dargestellten Lager gelagert. Das Gehäuseoberteil 30 sitzt auf dem Gehäuseunterteil 18 auf und wird über Rastclipse festgehalten, von denen in Figur 6 der Rastclip 27 dargestellt ist. Die Rastzapfen 25 sind rotationssymmetrisch gestaltet und über Stege 25a mit dem übrigen Gehäuseunterteil 18 verbunden. Die Rastzapfen 25 sind in Arme 25b durch axial verlaufende Schlitze 25c aufgeteilt. Durch die Schlitze 25c und die sich verjüngenden Enden 25d ist es möglich, die Rastzapfen 25 durch Rundlöcher 32 der Leiterplatte 28 zu stecken, wobei der Durchmesser der Rundlöcher 32 geringer ist als der Durchmesser des Rastzapfens 25 im in Figur 6 dargestellten, unbelasteten Zustand. Durch die Elastizität des Rastzapfens 25 oder durch ein Einführen des Spreizkörpers 26 in dem Rastzapfen 25 nimmt der Rastzapfen seine ursprüngliche Form an, so daß der Motor auf der Leiterplatte 28 befestigt ist. Die Stege 26a (siehe Figur 5) des Spreizkörpers 26 sind so ausgelegt, daß sie bei einem Druck von oben auf den Spreizkörper 26 brechen. Der Spreizkörper 26 ist dann in den Rastzapfen 25 durch weiteren Druck von oben auf den Spreizkörper 26 einführbar. So wird der Motor mit der Unterseite seines Gehäuseunterteils 18 auf die Leiterplatte 28 gedrückt. Gleichzeitig werden die in Figur 6 nicht dargestellten Kontaktfedern 4 auf die Leiterplatte 30 gedrückt und mit auf der Leiterplatte 28 befindlichen elektrischen Leitern 33 elektrisch verbunden.

Auf die Schneckenradwelle 31 ist beispielsweise ein Zeiger eines Anzeigegerätes, beispielsweise eines Tachometers oder Drehzahlmessers, oder einer Uhr aufsetzbar.

## Patentansprüche

1. Zur Befestigung auf einer Leiterplatte bestimmter Elektromotor mit einem Rotor und einem Stator, der mehrere Spulen und Statorbleche aufweist, wobei die Statorbleche sich von den Spulen zu dem Rotor erstrecken, wobei der Motor Kontaktfedern (4, 9) aufweist, die mit jeweils einem Wicklungsende (6) der Spulen (1, 8) elektrisch leitend verbunden sind, und wobei die Kontaktfedern (4, 9) derart ausgestaltet sind, dass sie nach der Befestigung des Elektromotors auf der Leiterplatte (28) unter federnder Vorspannung in Anlage an elektrischen Leitern (33) der Leiterplatte (28) sind, **dadurch gekennzeichnet, dass** die Spulen (1, 8) einen Spulenkörper (3) aufweisen und dass die Kontaktfedern (4, 9) in oder an dem Spulenkörper (3) befestigt sind, dass der Spulenkörper (3) spritzgegossen ist und die Kontaktfedern (4, 9) mit Teilen des Spulenkörpers (3) umspritzt sind, dass die Wicklungsenden (6) der Spulenwicklungen (2) jeweils an einem Ende einer Kontaktfeder (4, 9) elektrisch leitend befestigt sind und dass die Kontaktfedern (4, 9) an diesem Ende gekröpft sind.

2. Elektromotor nach Anspruch 1 oder 2, **dadurch gekennzeichnet, daß** der Elektromotor ein Gehäuse (18) aufweist, in dem Öffnungen (21) ausgebildet sind, durch die die Kontaktfedern (4, 9) aus dem Gehäuse ragen.

3. Elektromotor nach einem der vorstehenden Ansprüche, **dadurch gekennzeichnet, daß** der Elektromotor einen oder mehrere Rastzapfen (25) aufweist, mit denen er in Ausnehmungen der Leiterplatte (28) einrastbar ist.

4. Elektromotor nach Anspruch 3, **dadurch gekennzeichnet, daß** der oder die Rastzapfen (25) durch jeweils einen Spreizkörper (26) spreizbar sind, der in das Innere des Rastzapfens (25) einführbar ist.

5. Elektromotor nach Anspruch 4, **dadurch gekennzeichnet, daß** der Spreizkörper (26) im Rastzapfen (25) einrastbar ist.

6. Elektromotor nach einem der vorstehenden Ansprüche, **dadurch gekennzeichnet, daß** die Statorbleche (10, 11, 12, 13) einen Stator bilden, der zentrisch eine Öffnung (14) zur Aufnahme des Rotors (15) aufweist, wobei die einzelnen Statorbleche (10, 11, 12, 13) um die Öffnung (14) herum angeordnet sind.

7. Elektromotor nach Anspruch 6, **dadurch gekennzeichnet, daß** jeweils zwei gegenüberliegende Statorbleche (10, 11, 12, 13) so zueinander angeordnet sind, daß sie eine Spule (1, 8) aufnehmen.

8. Elektromotor nach Anspruch 7, **dadurch gekennzeichnet, daß** der Elektromotor vier Statorbleche (10, 11, 12, 13) und zwei Spulen (1, 8) aufweist.

9. Elektromotor nach Anspruch 8, **dadurch gekennzeichnet, daß** zwei einander gegenüberliegende Statorbleche (10, 11) einfach zueinander derart gekröpft sind, daß Teile der Statorbleche (10b, 11b) parallel zueinander ausgerichtet sind, zwischen denen die erste Spule (1, 8) magnetisch gekoppelt angeordnet ist.

10. Elektromotor nach Anspruch 9, **dadurch gekennzeichnet, daß** die zwei anderen einander gegenüberliegenden Statorbleche (12, 13) in der Nähe der Öffnung (14) eine erste Kröpfung (12c, 13c) und in der Nähe der freien Enden (12b, 13b) eine zweite Kröpfung (12d, 13d) aufweisen und zwischen den freien Enden die zweite Spule (1, 8) magnetisch gekoppelt angeordnet ist.

11. Elektromotor nach einem der Ansprüche 6 bis 10, **dadurch gekennzeichnet, daß** die Statorbleche (10, 11, 12, 13) an der Öffnung (14) magnetisch gekoppelt sind.

12. Elektromotor nach einem der Ansprüche 6 bis 10, **dadurch gekennzeichnet, daß** die Statorbleche (10, 11, 12, 13) an der Öffnung (14) über ein nicht-magnetisches Metall (29) miteinander verbunden sind.

13. Elektromotor nach einem der vorstehenden Ansprüche, **dadurch gekennzeichnet, daß** die Spulen (1, 8) jeweils einen Spulenkern (5) aufweisen, der mit den Statorblechen (10, 11, 12, 13) verschweißt ist.

## Claims

1. Electric motor which is intended to be fixed to a printed circuit board and has a rotor and a stator which has a number of coils and stator plates, the stator plates extending from the coils to the rotor, the motor having contact springs (4, 9) which are in each case electrically conductively connected to a winding end (6) of the coils (1, 8), and the contact springs (4, 9) being configured such that, after the electric motor has been fixed to the printed circuit board (28), they are in contact under spring prestress with electric conductors (33) on the printed circuit board (28), **characterized in that** the coils (1, 8) have a coil former (3) and **in that** the contact springs (4, 9) are fixed in or on the coil former (3), **in that** the coil former (3) is injection moulded and the contact springs (4, 9) are encapsulated by injection moulding with parts of the coil former (3), **in that** the winding ends (6) of the coil windings (2) are in each case electrically conductively fixed to one end of a contact spring (4, 9) and **in that** the contact springs (4, 9) are bent over at this end.

2. Electric motor according to Claim 1 or 2, **characterized in that** the electric motor has a casing (18) in which openings (21) are formed, through which the contact springs (4, 9) protrude out of the casing.

3. Electric motor according to one of the preceding claims, **characterized in that** the electric motor has one or more latching pins (25), with which it can be latched into recesses in the printed circuit board (28).

4. Electric motor according to Claim 3, **characterized in that** the latching pin or pins (25) can be spread in each case by a spreading element (26), which can be inserted into the interior of the latching pin (25).

5. Electric motor according to Claim 4, **characterized in that** the spreading element (26) can be latched into the latching pin (25).

6. Electric motor according to one of the preceding claims, **characterized in that** the stator plates (10, 11, 12, 13) form a stator which, at the centre, has an opening (14) to accommodate the rotor (15), the individual stator plates (10, 11, 12, 13) being arranged around the opening (14).

7. Electric motor according to Claim 6, **characterized in that** in each case two opposite stator plates (10, 11, 12, 13) are arranged in relation to each other such that they accommodate a coil (1, 8).

8. Electric motor according to Claim 7, **characterized in that** the electric motor has four stator plates (10, 11, 12, 13) and two coils (1, 8).

9. Electric motor according to Claim 8, **characterized in that** two mutually opposite stator plates (10, 11) are bent over once towards each other in such a way that parts of the stator plates (10b, 11b) are aligned parallel to each other, between which the first coil (1, 8) is arranged in a magnetically coupled fashion.

10. Electric motor according to Claim 9, **characterized in that** the two other mutually opposite stator plates (12, 13) have a first bend (12c, 13c) in the vicinity of the opening (14) and a second bend (12d, 13d) in the vicinity of the free ends (12b, 13b), and the second coil (1, 8) is arranged between the free ends in a magnetically coupled fashion.

11. Electric motor according to one of Claims 6 to 10, **characterized in that** the stator plates (10, 11, 12, 13) are magnetically coupled at the opening (14).

12. Electric motor according to one of Claims 6 to 10, **characterized in that** the stator plates (10, 11, 12, 13) are connected to one another at the opening (14) via a non-magnetic metal (29).

13. Electric motor according to one of the preceding claims, **characterized in that** the coils (1, 8) each have a coil core (5) which is welded to the stator plates (10, 11, 12, 13).

## Revendications

1. Moteur électrique, ayant un rotor et un stator, destiné à être fixé sur une carte à circuits imprimés, comportant plusieurs bobines et tôles de stator, les tôles de stator s'étendant des bobines jusqu'au rotor, le moteur comportant des ressorts de contact (4, 9), reliés électriquement chacun à une extrémité d'enroulement (6) des bobines (1, 8) et les ressorts de contact (4, 9) étant conçus de telle manière qu'ils sont, après la fixation du moteur électrique sur la carte à circuits imprimés (28), appliqués sur des conducteurs électriques (33) de la carte à circuits imprimés (28) sous l'effet d'une précontrainte élastique, **caractérisé par le fait que** les bobines (1, 8) ont un support de bobine (3) et que les ressorts de contact (4, 9) sont fixés dans ou sur le support de bobine (3), que le support de bobine (3) est moulé par injection et que les ressorts de contact (4, 9) sont enrobés par injection avec des parties du support de bobine (3), que les extrémités (6) des enroulements (2) de bobines sont reliées électriquement chacune à une extrémité d'un ressort de contact (4, 9) et que les ressorts de contact (4, 9) sont cintrés à cette extrémité.

2. Moteur électrique selon la revendication 1 ou 2 **caractérisé par le fait que** le moteur électrique a un boîtier (18), dans lequel sont pratiquées des ouvertures (21) à travers lesquelles les ressorts de contact (4, 9) font saillie hors du boîtier.

3. Moteur électrique selon l'une des revendications précédentes **caractérisé par le fait que** le moteur électrique comporte un ou plusieurs tourillons d'arrêt (25) avec lesquels il s'encliquette dans des évidements de la carte à circuits imprimés (28).

4. Moteur électrique selon la revendication 3 **caractérisé par le fait que** le ou les tourillons d'arrêt (25) sont expansibles individuellement sous l'effet d'une pièce d'écartement (26) pouvant être engagée dans l'intérieur du tourillon d'arrêt (25).

5. Moteur électrique selon la revendication 4 **caractérisé par le fait que** la pièce d'écartement (26) peut s'encliqueter dans le tourillon d'arrêt (25).

6. Moteur électrique selon l'une des revendications précédentes **caractérisé par le fait que** les tôles de stator (10, 11, 12, 13) forment un stator comportant une ouverture (14) destinée à recevoir le rotor (15), les différentes tôles de stator (10, 11, 12, 13) étant disposées autour de l'ouverture (14).

7. Moteur électrique selon la revendication 6 **caractérisé par le fait que** deux tôles de stator (10, 11, 12, 13) se faisant face sont disposées deux à deux l'une par rapport à l'autre de telle manière qu'elles prennent en charge une bobine (1, 8).

8. Moteur électrique selon la revendication 7 **caractérisé par le fait que** le moteur électrique comporte deux tôles de stator (10, 11, 12, 13) et deux bobines (1, 8).

9. Moteur électrique selon la revendication 8 **caractérisé par le fait que** deux tôles de stator (10, 11) se faisant face sont cintrées une fois l'une vers l'autre, que des parties des tôles de stator (10b, 11 b) sont orientées parallèlement les unes aux autres et qu'entre elles, la première bobine (1, 8) est disposée en couplage magnétique.

10. Moteur électrique selon la revendication 9 **caractérisé par le fait que** les deux autres tôles de stator (12, 13) se faisant face ont une première courbure (12c, 13c) à proximité de l'ouverture (14) et une deuxième courbure (12d, 13d) à proximité des extrémités libres (12b, 13b) et que, entre les extrémités libres, la deuxième bobine (1, 8) est disposée en couplage magnétique.

11. Moteur électrique selon l'une des revendications 6 à 10 **caractérisé par le fait que** les tôles de stator (10, 11, 12, 13) sont couplées magnétiquement au niveau de l'ouverture (14).

12. Moteur électrique selon l'une des revendications 6 à 10 **caractérisé par le fait que** les tôles de stator (10, 11, 12, 13) sont reliées l'une à l'autre au niveau de l'ouverture (14) par l'intermédiaire d'un métal non magnétique (29).

13. Moteur électrique selon l'une des revendications précédentes **caractérisé par le fait que** les bobines (1, 8) comportent chacune un noyau de bobine (5) qui est soudé aux tôles de stator (10, 11, 12, 13).
